# EUROPEAN PATENT SPECIFICATION

(11) **EP 2 876 872 B1**
(45) Date of publication and mention of the grant of the patent: **05.06.2019**
(21) Application number: 13005443.0
(22) Date of filing: 20.11.2013
(51) Int. Cl.: H04M 11/06, H04B 3/32, H04B 3/487

(54) **Digital subscriber line access multiplexer for sending communication signals to customer devices**
Digitaler Teilnehmerleitungszugangs-Multiplexer zum Senden von Kommunikationssignalen zu Kundenvorrichtungen
Multiplexeur d'accès de ligne d'abonné numérique permettant d'envoyer des signaux de communication à des dispositifs de clients

(43) Date of publication of application: 27.05.2015
(73) Proprietor: Swisscom AG, 3050 Bern (CH)
(72) Inventor: Zasowski, Thomas, 8053 Zürich (CH); Lamparter, Oliver, 8006 Zürich (CH)

(56) References cited:
- WO-A1-2013/026479
- US-A1- 2003 118 163
- US-A1- 2013 272 314

## Description

### FIELD OF THE INVENTION

The present invention relates to a digital subscriber line access multiplexer for sending communication signals via customer lines to customer devices at one or more customer premises and to a method of sending communication signals via customer lines to customer devices at one or more customer premises.

### BACKGROUND ART

For operators of telecommunication networks, provisioning of high-speed broadband services using an installed infrastructure of lines, such as wired telephone lines of a plain old telephone services (POTS) network, is of very high importance. Often, telecommunication operators offer such services using digital subscriber line (DSL) standards. Recently, new technologies and standards such as vectoring or G.fast have been developed, and the feasibility of still higher performance has been demonstrated.

Factors limiting the performance of broadband services include crosstalk between the lines and line attenuation.

Crosstalk refers to electromagnetic interference from one line to another line. Near end crosstalk (NEXT) refers to crosstalk measured at the same end of the line with respect to the interfering transmitter. Far end crosstalk (FEXT) refers to crosstalk measured at the other end of the line with respect to the interfering transmitter. Alien crosstalk (AXT) refers to crosstalk caused by lines routed close to the line of interest. Further types of crosstalk exist. In DSL standards, performance is often limited because of far end crosstalk (FEXT).

Vectoring is a transmission method that mitigates the effect of crosstalk and improves performance. Crosstalk between lines is estimated and on the transmitting side pre-coding or pre-processing of signals is performed in such a manner that crosstalk injected by other transmitters into a line is cancelled or reduced on the receiving side.

Line attenuation increases with line length and signal frequency. Accordingly, with the demand for increased speed of broadband services, which requires higher frequencies, the length of lines must be reduced accordingly, particularly in case of limited transmit power. However, reducing the length of lines is often not possible, particularly, in case of already installed lines.

WO 2013/026479 relates to adjusting transmission over DSL lines. A first signal is transmitted on a first line and a second signal is transmitted on a second line. The second signal is related to the first signal in such a manner that a contribution from the second signal interferes constructively with a signal at the second end of the first line.

US 2003/0118163 concerns transmitting, receiving, and accessing information for XDSL transmission systems. All downstream data communication may be transmitted to all subscriber premises, which allows the system to convert leaking energy or perceived noise between twisted wire-pairs into constructive energy. Transmitting all downstream signal information to all subscriber premises allows for increased useful signal bandwidth. The adjustment of phase and power spectrum density on all pairs of wires results in the crosstalk energy constructively aiding the signal and the desired receiver.

US 2013/0272314 relates to a fiber-fed distribution point which uses existing copper facilities connected to customer premises. A first connection is configured to communicate with a first customer premises equipment. A second connection is configured to communicate with a second customer premises equipment. During a period of time transmission across the first connection is avoided in order to avoid crosstalk between the first and second connections.

### DISCLOSURE OF THE INVENTION

It is an object of the present invention to provide a digital subscriber line access multiplexer for sending communication signals to communication devices, which does not have at least some of the disadvantages of the prior art. In particular, it is an object of the present invention to provide a digital subscribe line access multiplexer for sending communication signals to communication devices, which improves performance of broadband services.

According to the present invention, these objects are achieved through the features of the independent claims. In addition, further advantageous embodiments follow from the dependent claims and the description.

According to the present invention, the above-mentioned objects are particularly achieved in that a digital subscriber line access multiplexer for sending communication signals via customer lines to customer devices at one or more customer premises is configured to send a communication signal for a particular customer device concurrently via more than one customer line to the particular customer device. Any number of customer lines may be involved. Particularly, a customer line is a digital subscriber line based on a wire pair connection. One and the same communication signal is sent via more than one customer line to the particular customer device. The communication signal is sent directly to the particular communication device via one of the communication lines. Moreover, because of crosstalk between the customer lines, the communication signal is sent as well via a crosstalk channel to the particular customer device. Accordingly, the power of signals received at the particular customer device is increased and the performance of broadband services is improved. Alternatively, the distance between a digital subscriber line access multiplexer and customer premises can be increased, while maintaining power levels, which would be achieved, without using the effect of crosstalk to improve signal strength.

The digital subscriber line multiplexer is further configured to enhance a communication signal, received from a particular customer device via a first customer line, by using a further communication signal received concurrently from the particular customer device via a second customer line. The further communication signal is received from the particular customer device because of crosstalk, constituting a crosstalk channel, between the first customer line and the second customer line. Using the further communication signal, the communication signal received from the particular customer device via the first customer line is increased with regards to its power and the performance of broadband services is improved.

In an embodiment, the digital subscriber line access multiplexer is configured to determine one or more channel coefficients of the transmission channel of a customer line and/or of crosstalk channels between customer lines, and to send the communication signal for the particular customer device using one or more of the determined channel coefficients. In particular, the determined channel coefficients are used to perform pre-processing or pre-coding in such a manner that the power of communication signals, received by the customer device via the more than one customer lines, is increased. For example, pre-processing or pre-coding is performed in such a manner that the delay, caused by the channel of the customer line and the crosstalk channel between the lines, is equalized.

In an embodiment, the digital subscriber line access multiplexer is further configured to determine one or more channel coefficients of the transmission channel of a customer line and/or of crosstalk channels between customer lines, and to enhance the communication signal received from a particular customer device, by using one or more of the determined channel coefficients. In particular, the determined channel coefficients are used to perform post-processing or post-coding in such a manner that the power of communication signals, received by the digital subscriber line access multiplexer via the first and the second customer lines, is increased. For example, post-processing or post-coding is performed in such a manner that the delay caused by the channels is equalized.

In an embodiment, the digital subscriber line access multiplexer is further configured to limit communication signals to specific time periods and/or to specific frequency bands. Any customer line, which is at least partially inactive, may be used to increase reception power at the customer device or the digital subscriber line access multiplexer. A particular customer line may be inactive because there is no customer device installed at the customer premise, because the customer device is turned off, or because the customer device is turned off during specific time periods. Accordingly, crosstalk channels between customer lines may be used during these specific time periods to increase reception power of communication signals. A particular customer line may be partially inactive because a connected customer device operates only at certain frequencies, leaving specific frequency bands unused. Accordingly, crosstalk channels between the customer lines may be used within these specific frequency bands to increase reception power of communication signals.

In an embodiment, the digital subscriber line access multiplexer is further configured to use vectoring. By using vectoring, the performance of broadband services is further improved.

In an embodiment, the digital subscriber line access multiplexer is further configured to determine status information of one or more customer devices, the status information indicating for a customer device whether it is turned on, turned off, or disconnected, and/or its operating frequency, and to use the status information for selecting the more than one customer lines for sending the communication signal to the particular customer device. Accordingly, the use of crosstalk channels is adapted dynamically in response to changes, particularly changes related to the customer devices, such as customers connecting or disconnecting customer devices, and the performance of broadband services is further improved.

In an embodiment, the digital subscriber line access multiplexer is further configured to communicate via one or more broadband fibre optics line. In particular, broadband fibre optics lines serve for communication between the operator of a telecommunications network and the digital subscriber line access multiplexer at high speed, wherein the performance of broadband services is further improved.

In addition to a digital subscriber line access multiplexer for sending communication signals via customer lines to customer devices at one or more customer premises, the present invention further relates to a communication method of sending communication signals via customer lines to customer devices at one or more customer premises, the method comprising: sending a communication signal for a particular customer device concurrently via more than one customer line to the particular customer device.

In an embodiment, the communication method further comprises enhancing a communication signal, received from a particular customer device via a first customer line, by using a further communication signal received concurrently from the particular customer device via a second customer line.

In an embodiment, the communication method further comprises determining channel coefficients of the transmission channels of customer lines and/or of crosstalk channels between customer lines, and sending the communication signal for the particular customer device using one or more of the determined channel coefficients.

In an embodiment, the communication method further comprises determining one or more channel coefficients of the transmission channels of customer lines and/or of crosstalk channels between customer lines, and enhancing the communication signal received from a particular customer device by using one or more of the determined channel coefficients.

In an embodiment, the communication method further comprises limiting communication signals to specific time periods and/or to specific frequency bands.

In an embodiment, the communication method further comprises using vectoring.

Moreover, the invention further relates to a computer program product comprising a non-transitory computer readable medium having stored thereon computer program code for controlling one or more processors of a digital subscriber line access multiplexer such that the digital subscriber line access multiplexer performs at least one of: sending a communication signal for a particular customer device concurrently via more than one customer line to the particular customer device, and enhancing a communication signal received from a particular customer device via a first customer line by using a further communication signal received concurrently from the particular customer device via a second customer line.

### BRIEF DESCRIPTION OF THE DRAWINGS

The herein described invention will be more fully understood from the detailed description given herein below and the accompanying drawings, which should not be considered limiting to the invention described in the appended claims. The drawings are showing:
- Fig. 1: a digital subscriber line access multiplexer for sending communication signals via customer lines to customer devices;
- Fig. 2: a digital subscriber line access multiplexer for enhancing a communication signal received via a customer line from a customer device;
- Fig. 3: a flow diagram illustrating an exemplary sequence of steps for sending communication signals via customer lines to customer devices;
- Fig. 4: a flow diagram illustrating an exemplary sequence of steps for enhancing a communication signal received via a customer line from a customer device, and
- Fig. 5: a digital subscriber line access multiplexer which includes multiple aggregation cards, each aggregation card having a number of ports, each port being connected to a customer line.

### MODE(S) FOR CARRYING OUT THE INVENTION

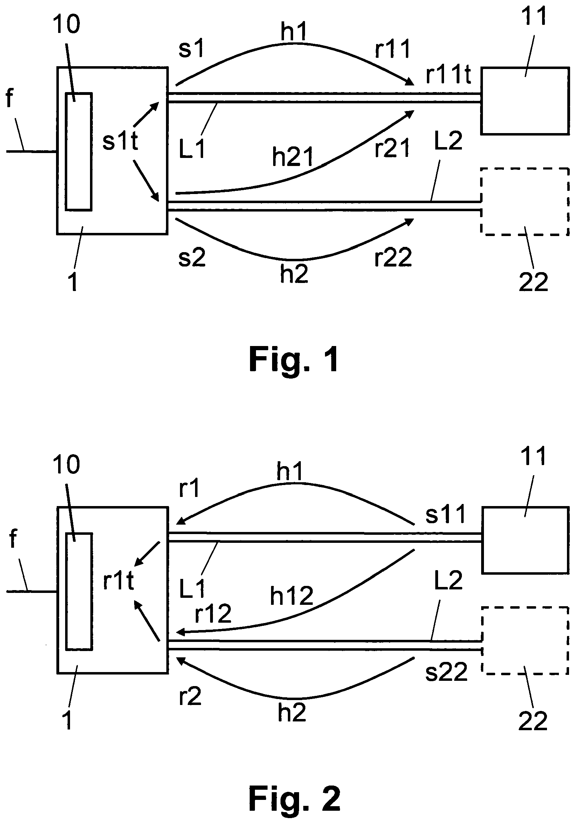

Figures 1 and 2 show a digital subscriber line access multiplexer 1, a first customer device 11 and a second customer device 22. A first customer line L1 connects the digital subscriber line access multiplexer 1 with the first customer device 11. A second customer line L2 connects the digital subscriber line access multiplexer 1 with the second customer device 22. In Figures 1 and 2, the second customer device 22 is drawn using dotted lines, because it is assumed that the second customer device 22 is at least partially inactive, as will described in more detail below.

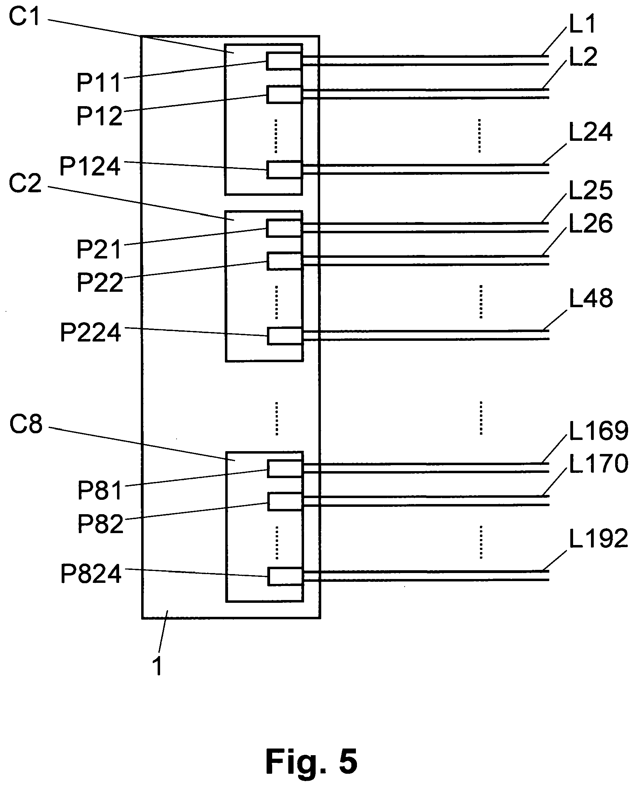

Figure 5 shows schematically a digital subscriber line access multiplexer 1 which includes one or multiple aggregation cards C1, C2, ... C8, e.g. eight aggregation cards, wherein each aggregation card C1, C2, ... C8 has a number of ports P11, P12, P124, ... P824, e.g. twenty-four ports. Each of these for example twenty-four ports P11, P12, P124, ... P824 is configured to have a customer line L1, L2, ... L24, L25, ... L48, ... L169, L170, ... L192 connected thereto. Hence, the number of customer lines L1, L2 that may be connected to the digital subscriber line access multiplexer 1 may be as large as several dozens, several hundreds, or more.

The digital subscriber line access multiplexer 1 comprises a circuit 10 configured to control operations of the digital subscriber line access multiplexer 1. Depending on the embodiment, the circuit comprises one or more processors 10, controlled by programmed software modules, or another programmed logic unit or combination of hardware and software modules. In case of circuit 10 being implemented by way of one or more processors, the computer program code for controlling the processor(s) is stored on a non-transitory computer readable medium, which is connected to the processor(s) in a fixed or removable fashion. Specifically, the circuit 10 is configured to selectively route communication signals to one or more customer line L1, L2 connected to the digital subscriber line access multiplexer 1, and to selectively receive communication signals from one or more customer line L1, L2 connected to the digital subscriber line access multiplexer 1, as will be described in more detail in the following paragraphs. The circuit 10 is further configured to perform various functions, e.g. pre-processing or pre-coding functions, post-processing or post-coding functions, etc., as described in the following paragraphs.

Each of the customer lines L1, L2 runs from the digital subscriber line access multiplexer 1 to particular customer premises or locations, such as customer apartments, customer houses, customer offices, etc. To some extent, the customer lines L1, L2 run in parallel. For example, the digital subscriber line access multiplexer 1 is installed at a certain location in a town, e.g. in a control box installed close to a street. The customer lines L1, L2 are arranged as interconnections between the digital subscriber line access multiplexer 1 and apartments of one or several houses. Between the digital subscriber line access multiplexer 1 and a particular house, the customer lines L1, L2 run in parallel. Inside the house, the customer lines L1, L2 may run in parallel as well, until one or more customer lines L1, L2 branch off to a particular apartment.

In a variant, two or even more customer lines L1, L2 are installed between the digital subscriber line access multiplexer 1 and particular customer premises. In this case, two or more customer lines L1, L2 run in parallel along the entire path from the digital subscriber line access multiplexer 1 to the customer premises.

When customer lines L1, L2 run in parallel, at least to some extent, there is crosstalk between these lines L1, L2. In the following paragraphs, a downlink case and an uplink case are described. The downlink case relates to a crosstalk channel h21 between the second line L2 and the first line L1. The uplink case relates to a crosstalk channel h12 between the first customer line L1 and the second customer line L2.

As mentioned before, the second customer device 22 is assumed to be at least partially inactive, for example because the second customer device 22 is not turned on, at least not at all times, or because the second customer device 22 is not installed at all. More specifically, the at least partially inactive second customer device 22 is characterized by one or more of the following states: the second customer device 22 is not installed, the second customer device 22 is not connected to the customer line L2, the second customer device 22 is turned off, and/or the second customer device 22 is operating at certain (specific) frequencies.

Accordingly, the second line L2 is at least partially inactive as well. In other words, the second line L2, which is installed between the digital subscriber line access multiplexer 1 and particular customer premises, is not used, it is used only during particular time periods, and/or it is used only at certain frequencies. The following description refers to cases where the second line L2 is not used at all, to time periods where the second line L2 is not used, and/or to specific frequency bands, which are not used by the second line L2.

Referring to Figure 1, which illustrates the downlink case, the digital subscriber line access multiplexer 1 sends a communication signal s1t for the first customer device 11 concurrently via more than one customer lines L1, L2. The communication signal s1t is transmitted as a first communication signal s1 via the first customer line L1 to the first customer device 11. As well, the communication signal s1t is sent as a second communication signal s2 via the second customer line L2. The second communication signal s2 is sent via the second customer line L2 to the second customer device 22. Moreover, because of crosstalk, the second communication signal s2 is also "sent" via crosstalk channel h21, between the second customer line L2 and the first customer line L1, to the first customer device 11, where it is superimposed with the communication signal s1 sent via the first customer line L1.

In the following paragraphs, a mathematical representation is given assuming a flat channel. In case of a non-flat channel, the mathematical representation is adapted accordingly using a vector notation. In case of an OFDM system (OFDM: Orthogonal Frequency-Division Multiplexing), the mathematical representation is related to one subcarrier.

Thus, the communication signal r11t received at customer device 11 is a superimposition of the communication signal r11 received via the first line L1 and the communication signal r21 received via the crosstalk channel h21, between the second line L2 and the first line L1: r11t=r11 + r21 = s1*h1 + s2*h21, whereby h1 denotes the channel coefficients of the first customer line L1, and h21 denotes the channel coefficients of the crosstalk channel h21, between the second customer line L2 and the first customer line L1.

In case the second communication signal s2 sent via the crosstalk channel h21, between the second line L2 and the first line L1, is equal to the first communication signal s1, sent via the first customer line L1, the communication signal r11t received at customer device 11 amounts to: r11t = s1*h1 + s1*h21 = s1*(h1+h21). If the channel coefficients h1, h21 add up to a positive number, the power of the communication signal r11t received via the first customer line L1 and via the crosstalk channel h21 between the second customer line L2 and the first customer line L1 is increased with respect to the communication signal r11 received via the first customer line L1 alone.

In order to avoid that channel coefficients h1 and h21 cancel each other, pre-processing or pre-coding may be applied, whereby the first communication signal s1 and the second communication signal s2 are pre-processed or pre-coded, before being sent via the respective line or crosstalk channel. Any known pre-processing or pre-coding scheme can be applied. For instance, pre-processing or pre-coding using the conjugate complex of the channel coefficients h1', h21' can be applied. In this case, the communication signal r11t received at the first customer device 11 amounts to: r11t = h1*h1'*s1 + h21*h21'*s1 = (h1^2+h21^2)*s1. Accordingly, the channel coefficients h1, h21 add up to a positive value, irrespective of the channel coefficients being positive or negative, and the power of the communication signal r11t received via the first customer line L1 and via the crosstalk channel h21, between the second customer line L2 and the first customer line L1, is increased with respect to the power of the communication signal r11 received via the first customer line L1 alone.

Referring to Figure 2, which illustrates the uplink case, the digital subscriber line access multiplexer 1 enhances a communication signal r1 received from the first customer device 11 via the first customer line L1, by using a further communication signal r12 received concurrently from the customer device 11 via the second customer line L2. The communication signal r1 received from the first customer device 11 via the first customer line L1 is received because the first customer device 11 sends a signal s11 via the first customer line L1. The further communication signal r12 received from the first customer device 11 is received because of crosstalk resulting from the first customer device 11 sending the signal s11, i.e. because of the crosstalk channel h12, between the first line L1 and the second line L2. As the second customer device 22 is inactive, in the sense as described above, no communication signal r2 is received via the second customer line L2 from the second customer device 22.

Enhancing the communication signal r1 received from the first customer device 11 is based on the superimposition of the communication signal r1 and the communication signal r12 received via second customer line L2, because of crosstalk between the first customer line L1 and the second customer line L2. The enhanced communication signal r1t amounts to: r1t = r1 + r12 = h1*s11 + h12*s11 = (h1+h12)*s11. If the channel coefficients h1, h21 add up to a positive value, the power of the enhanced communication signal r1t is increased with respect to the communication signal r1 received from the first customer device 1 1 via the first customer line L1 alone.

Any post-processing or post-coding may be applied when enhancing the communication signal r1, such as the multiplication with the conjugate complex of the channel coefficients. In this case, the enhanced communication signal r1t amounts to: r1t = h1'*h1*s11 + h12'*h12*s11 = (h1^2+h12^2)*s11. Accordingly, channel coefficients h1, h12 add up to a positive value, irrespective of the channel coefficients being positive or negative, and power of the enhanced communication signal r1t is increased with respect to the power of the communication signal r1 received via the first customer line L1 alone.

As shown in Figure 5, in typical installations a large number of customer lines L1, L2, ... L24, ..., L169, ..., L192 is connected to the digital subscriber line access multiplexer 1. In both the downlink case and the uplink case, any number of cross talk channels between any customer lines L1, L2, ... L24, ..., L169, ..., L192 may be used for sending a communication signal s1t to the first customer device 11 and/or for enhancing the communication signal r1 received from the first customer device 11.

In order to apply pre-processing or post-processing, channel coefficients h1, h2, h21, h12 have to be determined. Any known technique such as transmission of training sequences may be applied in order to determine channel coefficients h1, h2, h21, h12.

In particular, the customer lines L1, L2 include wired lines already widely deployed, such as wired lines installed for use in plain old telephone services (POTS) network, e.g. wire pairs such as copper wire pairs.

In a variant, the digital subscribe line access multiplexer 1 is configured to limit communication signals to specific time periods and/or to specific frequency bands. For example, in case the second customer device 22 is operating during certain time periods, the second line L2 is not used for transmitting a communication signal to the first customer device 11 or for enhancing a communication signal r1 received via the first customer line L1. In case the second customer device 22 operates using certain frequencies, the second line L2 is used at other specific frequency bands for transmitting and/or receiving communication signals. Outside the specific time periods and/or the specific frequency bands, the digital subscriber line access multiplexer 1 may send a communication signal s2 via the second customer line L2 to the second customer device 22, wherein a communication signal r22=h2*s2 is received at the second customer device 22, and/or the digital subscribe line access multiplexer 1 may receive a communication signal r2 via the second customer line L2 from the second customer device 22, whereby the second customer device 22 sends a communication signal s22 and a communication signal r2=h2*s22 is received.

In a variant, the digital subscriber line access multiplexer 1 is configured to use vectoring in order to further increase signal quality.

In a variant, the digital subscriber line access multiplexer 1 is configured to determine the status information of customer devices 11, 22. For example, this is done by measuring the impedance of the customer lines L1, L2, or by detecting particular signals on the customer lines L1, L2, etc. Status information of customer devices 11, 22 may include information such as a particular customer device 11, 22 being connected to a customer line L1, L2, a particular customer device 11, 22 being turned on or turned off, a particular customer device 11, 22 being turned on during particular time periods, a particular customer device 11, 22 operating at particular frequency bands, etc. The status information may be used to select customer lines L1, L2 adapted for transmission or receipt of communication signals.

In a variant, the digital subscribe line access multiplexer 1 is configured to communicate via one or more broadband fibre optics lines f. The broadband fibre optics lines f may be used to communicate with communication devices installed at premises of a telecommunications network operator.

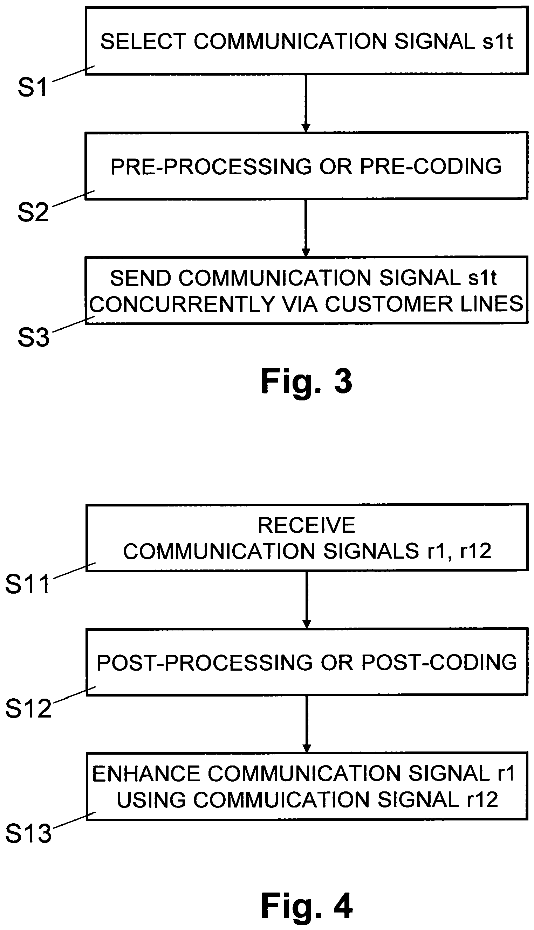

Figure 3 shows a flow diagram illustrating an exemplary sequence of steps for sending communication signals via customer lines to customer devices. In step S1, a communication signal s1t for a particular communication device 11 is selected. In optional step S2, pre-processing or pre-coding of the communication signal s1t is performed. In step S3, the communication signal is sent concurrently via more than one customer line L1, L2 to the particular customer device.

Figure 4 shows a flow diagram illustrating an exemplary sequence of steps for enhancing a communication signal received via a customer line from a customer device. In step S11, a communication signal r1 is received from a particular customer device 11 via the first customer line L1 and a further communication signal r12 is received concurrently from the particular customer device 11 via the second customer line L2. In optional step S12, post-processing or post-coding of the received communication signals r1, r12 is performed. In step S13, the further communication signal r12 is used to enhance the communication signal r1 received from the particular customer device 11 via the first customer line L1.

With reference to Figures 3 and 4, it should be noted that the steps are performed by the digital subscribe line access multiplexer 1 as directed or controlled by circuit 10.

### REFERENCE NUMERALS

- 1: digital subscriber line access multiplexer
- L1: first customer line
- L2: second customer line
- 10: circuit (processor)
- 11: first customer device
- 22: second customer device
- s1t: communication signal sent by the digital subscriber line access multiplexer
- r1t: enhanced communication signal received by the digital line access multiplexer
- s1,s11: communication signal sent via the first customer line
- s2,s22: communication signal sent via the second customer line
- r1,r11: communication signal received via the first customer line
- r2,r22: communication signal received via the second customer line
- r21 ,r12: communication signal received via the crosstalk channel
- h1: channel coefficients of first customer line
- h2: channel coefficients of second customer line
- h21: channel coefficients of crosstalk channel between second and first customer line
- h12: channel coefficients of crosstalk channel between first and second customer line
- f: broadband fibre optics line

## Claims

1. A digital subscriber line access multiplexer (1) for sending communication signals (s1t) via customer lines (L1,L2) to customer devices (11) at one or more customer premises, wherein the digital subscriber line access multiplexer (1) is configured to send a communication signal (s1t) for a particular customer device (11) concurrently via more than one customer line (L1, L2) to the particular customer device (11), **characterized in that** the digital subscriber line access multiplexer (1) is further configured to enhance a communication signal (r1), received from the particular customer device (11) via a first customer line (L1), using a further communication signal (r12) received concurrently from the particular customer device (11) via a second customer line (L2).

2. The digital subscriber line access multiplexer (1) according to claim 1, further configured to determine channel coefficients of one or more of the following channels: transmission channel (h1) of a customer line (L1), and crosstalk channels (h21,h12) between customer lines (L1,L2), and to send the communication signal (s1t) for the particular customer device (11) using one or more of the determined channel coefficients (h1,h21,h12).

3. The digital subscriber line access multiplexer (1) according to claims 1 or 2, further configured to determine one or more channel coefficients of the following channels: transmission channel (h1) of a customer line (L1), and crosstalk channels (h21,h12) between customer lines (L1,L2), and to enhance a communication signal (r1) received from a particular customer device (11) using one or more of the determined channel coefficients (h1,h21,h12).

4. The digital subscriber line access multiplexer (1) according to one of claims 1 to 3, further configured to limit the communication signals (s1t, r1, r12) to specific time periods and/or to specific frequency bands.

5. The digital subscriber line access multiplexer (1) according to one of claims 1 to 4, further configured to use vectoring.

6. The digital subscriber line access multiplexer (1) according to one of claims 1 to 5, further configured to determine one or more of the following status information of one or more customer devices (11, 22): turned on, turned off, disconnected, and operating frequency, and to use the status information for selecting the more than one customer line (L1, L2) for sending the communication signal (s1t) to the particular customer device (11).

7. The digital subscriber line access multiplexer (1) according to one of claims 1 to 6, further configured to communicate via one or more broadband fibre optics lines (f).

8. A communication method of sending communication signals (s1t) via customer lines (L1,L2) to customer devices (11) at one or more customer premises, comprising: sending a communication signal (s1t) for a particular customer device (11) concurrently via more than one customer line (L1, L2) to the particular customer device (11), **characterized in that** the method further comprises: enhancing a communication signal (r1), received from the particular customer device (11) via a first customer line (L1), using a further communication signal (r12) received concurrently from the particular customer device (11) via a second customer line (L2).

9. The communication method according to claim 8, further comprising: determining channel coefficients of one or more of the following channels: transmission channels (h1) of customer lines (L1), and crosstalk channels (h21,h12) between customer lines (L1,L2), and sending the communication signal (s1t) for the particular customer device (11) using one or more of the determined channel coefficients (h1,h21,h12).

10. The communication method according to claim 8 or 9, further comprising: determining one or more channel coefficients of the following channels: transmission channels (h1) of customer lines (L1), and crosstalk channels (h21,h12) between customer lines (L1,L2), and enhancing a communication signal (r1) received from a particular customer device (11) using one or more of the determined channel coefficients (h1,h21,h12).

11. The communication method according to one of claims 8 to 10, further comprising: limiting the communication signals (s1t, r1, r12) to specific time periods and/or to specific frequency bands.

12. The communication method according to one of claims 8 to 11, further comprising: using vectoring.

13. A computer program product comprising a non-transitory computer readable medium having stored thereon computer program code for controlling one or more processors of a digital subscriber line access multiplexer (1) such that the digital subscriber line access multiplexer (1) performs: sending a communication signal (s1t) for a particular customer device (11) concurrently via more than one customer line (L1, L2) to the particular customer device (11), and enhancing a communication signal (r1), received from the particular customer device (11) via a first customer line (L1), using a further communication signal (r12) received concurrently from the particular customer device (11) via a second customer line (L2).

## Patentansprüche

1. Digitaler Teilnehmerleitungszugang-Multiplexer (1) zum Senden von Kommunikationssignalen (s1t) über Kundenleitungen (L1, L2) an Kundenvorrichtungen (11) in einer oder mehreren Kundenräumlichkeiten, wobei der digitale Teilnehmerleitungszugang-Multiplexer (1) eingerichtet ist, um ein Kommunikationssignal (s1t) für eine bestimmte Kundenvorrichtung (11) gleichzeitig über mehr als eine Kundenleitung (L1, L2) an die bestimmte Kundenvorrichtung (11) zu senden, **dadurch gekennzeichnet, dass** der digitale Teilnehmerleitungszugang-Multiplexer (1) ferner eingerichtet ist, um ein Kommunikationssignal (r1) zu verstärken, empfangen von der bestimmten Kundenvorrichtung (11) über eine erste Kommunikationsleitung (L1), wobei ein weiteres Kommunikationssignal (r12) genutzt wird, gleichzeitig empfangen von der bestimmten Kundenvorrichtung (11) über eine zweite Kundenleitung (L2).

2. Digitaler Teilnehmerleitungszugang-Multiplexer (1) gemäss Anspruch 1, ferner eingerichtet, um Kanalkoeffizienten für einen oder mehreren der folgenden Kanäle zu bestimmen: Übertragungskanal (h1) von einer Kundenleitung (L1) und Übersprechungskanäle (h21, h12) zwischen Kundenleitungen (L1, L2) und um das Kommunikationssignal (s1t) für die bestimmte Kundenvorrichtung (11) zu senden, wobei einer oder mehrere der bestimmten Kanalkoeffizienten (h1, h21, h12) verwendet werden.

3. Digitaler Teilnehmerleitungszugang-Multiplexer (1) gemäss Ansprüchen 1 oder 2, ferner eingerichtet, um einen oder mehrere Kanalkoeffizienten der folgenden Kanäle zu bestimmen: Übertragungskanal (h1) von einer Kundenleitung (L1) und Übersprechungskanäle (h21, h12) zwischen Kundenleitungen (L1, L2) und um ein Kommunikationssignal (r1) zu verstärken, empfangen von einer bestimmten Kundenvorrichtung (11), wobei einer oder mehrere der bestimmten Kanalkoeffizienten (h1, h21,h12) verwendet werden.

4. Digitaler Teilnehmerleitungszugang-Multiplexer (1) gemäss einem der Ansprüche 1 bis 3, ferner eingerichtet, um die Kommunikationssignale (s1t, r1, r12) auf spezifische Zeitperioden und/oder auf spezifische Frequenzbänder zu begrenzen.

5. Digitaler Teilnehmerleitungszugang-Multiplexer (1) gemäss einem der Ansprüche 1 bis 4, ferner eingerichtet, um Vectoring zu verwenden.

6. Digitaler Teilnehmerleitungszugang-Multiplexer (1) gemäss einem der Ansprüche 1 bis 5, ferner eingerichtet, um eine oder mehrere Statusinformationen von einer oder mehreren Kundenvorrichtungen (11, 22) zu bestimmen: Eingeschaltet, Ausgeschaltet, Unterbrochen und Betriebsfrequenz und um die Statusinformationen zu nutzen, um die mehr als eine Kundenleitung (L1, L2) auszuwählen zum Senden des Kommunikationssignals (s1t) an die bestimmte Kundenvorrichtung (11).

7. Digitaler Teilnehmerleitungszugang-Multiplexer (1) gemäss einem der Ansprüche 1 bis 6, ferner eingerichtet, um über eine oder mehrere Breitbandglasfaserleitungen (f) zu kommunizieren.

8. Kommunikationsverfahren zum Senden von Kommunikationssignalen (s1t) über Kundenleitungen (L1, L2) an Kundenvorrichtungen (11) in einer oder mehreren Kundenräumlichkeiten, umfassend: Senden eines Kommunikationssignals (s1t) für eine bestimmte Kundenvorrichtung (11) gleichzeitig über mehr als eine Kundenleitung (L1, L2) an die bestimmte Kundenvorrichtung (11), **dadurch gekennzeichnet, dass** das Verfahren ferner umfasst: Verstärken eines Kommunikationssignals (r1), empfangen von der bestimmten Kundenvorrichtung (11) über eine erste Kundenleitung (L1), wobei ein weiteres Kommunikationssignal (r12) verwendet wird, gleichzeitig empfangen von der bestimmten Kundenvorrichtung (11) über eine zweite Kundenleitung (L2).

9. Kommunikationsverfahren gemäss Anspruch 8, ferner umfassend: Bestimmen von Kanalkoeffizienten von einem oder mehreren der folgenden Kanäle: Übertragungskanäle (h1) der Kundenleitungen (L1) und Übersprechungskanäle (h21, h12) zwischen Kundenleitungen (L1, L2) und Senden des Kommunikationssignals (s1t) für eine bestimmte Kundenvorrichtung (11), wobei einer oder mehrere der bestimmten Kanalkoeffizienten (h1, h21, h12) verwendet werden.

10. Kommunikationsverfahren gemäss Anspruch 8 oder 9, ferner umfassend: Bestimmen von einem oder mehreren Kanalkoeffizienten der folgenden Kanäle: Übertragungskanäle (h1) der Kundenleitungen (L1) und Übersprechungskanäle (h21, h12) zwischen Kundenleitungen (L1, L2) und Verstärken eines Kommunikationssignals (r1), empfangen von einer bestimmten Kundenvorrichtung (11), wobei einer oder mehrere der bestimmten Kanalkoeffizienten (h1, h21, h12) verwendet werden.

11. Kommunikationsverfahren gemäss einem der Ansprüche 8 bis 10, ferner umfassend: Begrenzen der Kommunikationssignale (s1t, r1, r12) auf spezifische Zeitperioden und/oder auf spezifische Frequenzbänder.

12. Kommunikationsverfahren gemäss einem der Ansprüche 8 bis 11, ferner umfassend: Verwenden von Vectoring.

13. Computerprogrammprodukt, umfassend ein nicht-flüchtiges Computer lesbares Medium, auf welchem ein Computerprogramm-Code zur Steuerung eines oder mehrerer Prozessoren eines digitalen Teilnehmerleitungszugang-Multiplexers (1) gespeichert ist, so dass der digitale Teilnehmerleitungszugang-Multiplexer (1) folgendes ausführt: Senden eines Kommunikationssignals (s1t) für eine bestimmte Kundenvorrichtung (11) gleichzeitig über mehr als eine Kundenleitung (L1, L2) an die bestimmte Kundenvorrichtung (11) und Verstärken eines Kommunikationssignals (r1), empfangen von der bestimmten Kundenvorrichtung (11) über eine erste Kundenleitung (L1), wobei ein weiteres Kommunikationssignal (r12), gleichzeitig empfangen von der bestimmten Kundenvorrichtung (11) über eine zweite Kundenleitung (L2), verwendet wird.

## Revendications

1. Multiplexeur d'accès de ligne d'abonné numérique (1) pour envoyer des signaux de communication (s1t) à des appareils de clients (11), disposés dans un ou plusieurs locaux d'abonnés, via des lignes de clients (L1, L2), le multiplexeur d'accès de ligne d'abonné numérique (1) étant configuré pour envoyer un signal de communication (s1t) pour un appareil de client particulier (11) simultanément via plus d'une ligne de client (L1,L2) à l'appareil de client particulier (11), **caractérisé en ce que** le multiplexeur d'accès de ligne d'abonné numérique (1) est en outre configuré pour améliorer un signal de communication (r1), reçu de l'appareil de client particulier (11) via une première ligne de client (L1), en utilisant un autre signal de communication (r12) reçu simultanément de l'appareil de client particulier (11) via une deuxième ligne de client (L2).

2. Multiplexeur d'accès de ligne d'abonné numérique (1) selon la revendication 1, configuré en outre pour déterminer des coefficients de canal d'un ou plusieurs des canaux suivants: le canal de transmission (h1) d'une ligne de clients (L1), et les canaux de diaphonie (h21, h12) entre lignes de clients (L1, L2), et pour envoyer le signal de communication (s1t) à l'appareil de client particulier (11) en utilisant un ou plusieurs des coefficients de canal déterminés (h1, h21, h12).

3. Multiplexeur d'accès de ligne d'abonné numérique (1) selon l'une des revendications 1 ou 2, configuré en outre pour déterminer un ou plusieurs coefficients de canal des canaux suivants: le canal de transmission (h1) d'une ligne de clients (L1), et les canaux de diaphonie (h21, h12) entre lignes de clients (L1, L2), et pour améliorer un signal de communication (r1) reçu depuis un appareil de client particulier (11) utilisant un ou plusieurs des coefficients de canal déterminés (h1, h21, h12).

4. Multiplexeur d'accès de ligne d'abonné numérique (1) selon l'une des revendications 1 à 3, configuré en outre pour limiter les signaux de communication (s1t, r1, r12) à des périodes de temps spécifiques et/ou des bandes de fréquence spécifiques.

5. Multiplexeur d'accès de ligne d'abonné numérique (1) selon l'une des revendications 1 à 4, configuré en outre pour utiliser du vectoring.

6. Multiplexeur d'accès de ligne d'abonné numérique (1) selon l'une des revendications 1 à 5, configuré en outre pour déterminer une ou plusieurs des informations de statut suivantes d'un ou plusieurs appareils de clients (11, 22) : allumé, éteint, déconnecté, et la fréquence de fonctionnement, et pour utiliser l'information de statut pour sélectionner la plus qu'une ligne de clients (L1, L2) pour envoyer le signal de communication (s1t) à l'appareil de client particulier (11).

7. Multiplexeur d'accès de ligne d'abonné numérique (1) selon l'une des revendications 1 à 6, configuré en outre pour communiquer via une ou plusieurs lignes de fibre optique à haut débit (f).

8. Méthode de communication pour envoyer des signaux de communication (s1t) via des lignes de clients (L1, L2) à des appareils de clients (11) disposés dans un ou plusieurs locaux d'abonnés, comprenant : l'envoi d'un signal de communication (s1t) pour un appareil de client particulier (11) à l'appareil de client particulier (11) via plus d'une ligne de clients (L1, L2) simultanément, **caractérisé en ce que** la méthode comprend en outre : l'amélioration d'un signal de communication (r1), reçu depuis l'appareil de client particulier (11) via une première ligne de client (L1), en utilisant un autre signal de communication (r12) reçu simultanément depuis l'appareil de client particulier (11) via une deuxième ligne de client (L2).

9. Méthode de communication selon la revendication 8, comprenant en outre : la détermination de coefficients de canal d'un ou plusieurs des canaux suivants : canaux de transmission (h1) de lignes de clients (L1), et canaux de diaphonie (h21, h12) entre lignes de clients (L1, L2), et l'envoi du signal de communication (s1t) pour l'appareil de client particulier (11) en utilisant un ou plusieurs des coefficients de canal particuliers (h1, h21, h12).

10. Méthode de communication selon la revendication 8 ou 9, comprenant en outre : la détermination d'un ou plusieurs coefficients de canal des canaux suivants : canaux de transmission (h1) des lignes de clients (L1), et canaux de diaphonie (h21, h12) entre lignes de clients (L1, L2), et l'amélioration d'un signal de communication (r1) reçu depuis un appareil de client particulier (11) en utilisant un ou plusieurs des coefficients de canal particuliers (h1, h21, h12).

11. Méthode de communication selon l'une des revendications 8 à 10, comprenant en outre : la limitation des signaux de communication (s1t, r1, r12) à des périodes de temps spécifiques et/ou à des bandes de fréquences spécifiques.

12. Méthode de communication selon l'une des revendications 8 à 11, comprenant en outre : l'utilisation du vectoring.

13. Programme d'ordinateur comprenant un support lisible non-transitoire pour ordinateur sur lequel est sauvegardé un code de programme d'ordinateur pour contrôler un ou plusieurs processeurs d'un multiplexeur d'accès de ligne d'abonné numérique (1) de telle sorte que le multiplexeur d'accès de ligne d'abonné numérique (1) effectue : l'envoi d'un signal de communication (s1t) pour un dispositif de clients particulier (11) simultanément via plus d'une ligne de clients (L1, L2) pour un appareil de client particulier (11), et l'amélioration d'un signal de communication (r1), reçu depuis l'appareil de client particulier (11) via une première ligne de client (L1), en utilisant un autre signal de communication (r12) reçu simultanément depuis l'appareil de client particulier (11) via une deuxième ligne de clients (L2).
